# EUROPEAN PATENT SPECIFICATION

(11) **EP 0 608 083 B1**
(45) Date of publication and mention of the grant of the patent: **09.10.1996**
(21) Application number: 94300281.6
(22) Date of filing: 14.01.1994
(51) Int. Cl.: B23B 45/16, F16D 15/00, B25D 16/00, B25B 23/14

(54) **Power driven tool, in particular an electric tool**
Motorisch angetriebenes Werkzeug, insbesondere ein Elektrowerkzeug
Outil entraîné par moteur, en particulier un outil électrique

(30) Priority: 19.01.1993 DE 4302083
(43) Date of publication of application: 27.07.1994
(73) Proprietor: Black & Decker Inc., Newark Delaware 19711 (US)
(72) Inventor: Stirm, Michael, D-6370 Oberursel 4 (DE); Rüthers, Bruno, D-3492 Brakel (DE)
(74) Representative: Randall, John Walter

(56) References cited:
- CH-A- 175 749
- DE-A- 3 503 507
- DE-A- 3 844 311

## Description

The invention relates to a power-driven tool, in particular an electric tool, with a rotary-driven tool holder and a switch-over device, comprising at least one overload coupling, for switching between different operating conditions and/or modes, in which a first coupling part, rotatable about a rotation axis, has locking recesses into which extend, serving as locking elements when coupled, roller bodies which are held, non-displaceable in circumferential direction but movable radially and out of engagement with the locking recesses, in a second coupling part which is rotatable about the rotation axis.

With a known electric tool of this type in the form of a rotary hammer (German Patent Application DE-A-32 35 544), there is an overload coupling with locking elements, which sits between a driving element and the first coupling part, which latter comprises the locking recesses for receiving the roller bodies, specifically balls. The second coupling part, which forms a hollow shaft, contains an axially displaceable bolt with sections of different diameters, so that, in one of its axial positions, the bolt holds the roller bodies radially undisplaceable in engagement with the first coupling part, whereby a rotary drive of the tool holder takes place. In an axially shifted position of the bolt, the roller bodies can move so far radially inwards that they cease to be engaged with the locking recesses of the first coupling part and the tool holder is no longer driven, while the hammer mechanism continues to strike the hammer bit located in the tool holder.

With the known rotary hammer, there are thus two coupling arrangements, one of which serves as an overload coupling which interrupts the rotary drive when the hammer bit becomes stuck in the workpiece, while the other coupling serves for the switch-over between two different modes of operation, namely between a combined drill and hammer mode and a pure hammer mode.

The object of the invention is to simplify the structure of a power-driven tool.

To achieve this object, a tool of the type mentioned initially is designed according to the invention so that the first and second coupling parts are movable relative to each other between a first axial position, in which the roller bodies can be made to engage with the locking recesses by means of spring force, and a second axial position, and so that, in the second axial position, the roller bodies engage with a smooth rotating surface, axially offset with respect to the locking recesses, of the first coupling part.

With the tool according to the invention, the two coupling parts form, via the roller bodies under spring force in the first axial position, an overload coupling through which the rotary drive of the tool holder is effected, but in the event of overload a radial shift of the roller bodies against the spring force takes place and there is thus an overrunning of the locking recesses by the roller bodies. In the second axial position, the first and second coupling parts can rotate uncoupled against each other, as the roller bodies are guided on a smooth rotating surface, normally circular in cross-section, of the first coupling part, i.e. no transmission of a torque takes place between the two coupling parts. If such a structure is used in a rotary hammer, the tool holder does not rotate with this type of operation, but the hammer mechanism merely transmits impacts onto the hammer bit.

With the tool according to the invention, the function of the overload coupling and the function of a switchable coupling are thus effected by a single coupling, whereas with the known tool in the form of a rotary hammer this required two completely separate couplings inside the coupling arrangement.

The first coupling part can be driven by the intermediate shaft and the second coupling part can be coupled with the tool holder, so that, in the second axial position, the rotating surface of the first coupling part rotates in driven manner in relation to the roller bodies.

The first coupling part can be sleeve-like and have at one end gearing which meshes with a gearing on the intermediate shaft. The rotating surface can be formed of the first coupling part facing away from the gearing and the locking recesses can be located between the rotating surface and the gearing.

In a preferred configuration, which is particularly suitable for use in a rotary hammer for switching between pure hammer mode and combined drill and hammer mode, the radial distance between the rotating surface of the first coupling part and the rotation axis is preferably not greater than the radial distance between the bottom of the locking recesses and the rotation axis. In addition, the locking recesses are preferably open at the ends facing the peripheral surface. By this means, the roller bodies can be moved without hindrance out of the locking recesses in the direction of the rotating surface.

The second coupling part can be arranged non-rotatable and displaceable between the first and second axial positions on a coupling shaft which is coupled with the tool holder via a gear arrangement. The first coupling part can then sit freely rotatable and axially undisplaceable on the coupling shaft.

In another preferred configuration, which permits switching between two drive speeds for the tool holder of an electric tool, the switch-over device has two gears, arranged freely rotatable on a shaft or coupling shaft each forming a second coupling part, which gears have different external diameters and mesh constantly with gears provided in fixed manner on an intermediate shaft. Arranged un-rotatably on the coupling shaft between the gears is an axially displaceable switching sleeve which forms the first coupling part and is provided, at its axially opposite ends, with a smooth inner rotating surface and locking recesses located closer to the opposite end for the roller bodies provided in the associated gear.

Such a structure makes possible not only the optional coupling of one of the two gears with the coupling shaft and thus the selection of one of the two desired drive speeds for the tool holder via an overload coupling, but also switching between different drive speeds, without a blockage of the axial displacement movement of the switching sleeve because of the lack of alignment of elements. Rather, the switching sleeve can in each case be axially displaced into its desired end-position in the direction of one or other gear, so that the roller bodies are located in the area of the associated locking recesses even if, because of misalignment of locking recesses and roller bodies, there is no engagement between these. However, this engagement is produced with the first relative rotation of gear and switching sleeve by the spring forces acting on the roller bodies, and thus the coupling of gear and shaft to be driven is produced. The arrangement according to the invention thus effects not only the optional coupling of first and second coupling parts via an overload coupling, but also a type of synchronised switch-over movement.

It is admittedly already known (German Patent Application P 35 40 605) to use a switching sleeve, which is to be provided non-rotatable but axially displaceable on a shaft to be driven, in order to couple a driven gear with the shaft so that a type of synchronised switch-over takes place. Axially extending spring-loaded coupling pins which are made to engage with coupling recesses in the gear are provided in the switching sleeve for this purpose. If, upon switch-over there is no exact alignment of coupling pins and coupling recesses, there is an axial displacement of the coupling pins under spring pressure until the switching sleeve has reached the desired end-position. The locking of the coupling pins into the coupling recesses is effected upon the following rotation movement of the gear by spring forces acting on the coupling pins. With this design, however, the spring-loaded coupling pins serve only to couple gear and switching sleeve. They do not form an overload coupling.

To obtain clearly defined switching positions with this configuration according to the invention, the roller bodies of one gear are located in the area of the associated locking recesses of the switching sleeve when the roller bodies of the other gear engage with the associated smooth inner rotating surface. This ensures that only one of the two gears is ever coupled via the switching sleeve with the shaft to be driven.

The invention is explained in more detail below with reference to the Figures.

Figure 1 shows, in a side view and partly opened up in greatly simplified representation, an electric tool in the form of a rotary hammer.

Figure 2 shows, in an enlarged partial view, an area of the rotary hammer essentially identified by the circle A.

Figure 3 shows, in a part section, elements of the switch-over device of the rotary hammer from Figures 1 and 2, the first axial position being represented in the upper half and the second axial position in the lower half.

Figure 4 shows, in exploded, enlarged partial view, elements of the switch-over device, containing the coupling, of the rotary hammer according to Figures 1 to 3.

Figure 5 shows, in section, another version of a switch-over device.

Figure 6 shows, in an exploded view, the parts of the switch-over device from Figure 5.

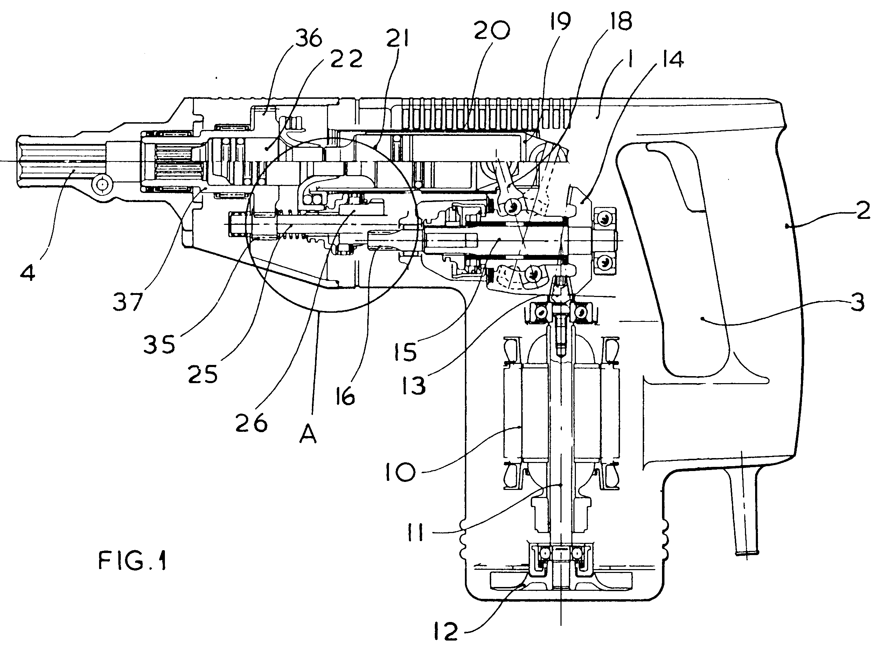

The rotary hammer represented in Figure 1 has a housing 1, which comprises in the rear zone a handle section 2 adjacent to which is formed a handle opening 3. Located at the front end of the rotary hammer is a diagrammatically represented tool holder 4 into which a hammer bit is inserted during operation.

Arranged in the housing 1 is an electric motor 10 whose electrical connections are not represented and which has on its armature shaft 11 a conventional fan wheel 12. Provided at the end of the armature shaft 11 opposite the fan wheel is a bevel gear 13 which meshes with a gear 14 which is secured non-rotatably on an intermediate shaft 15 which extends perpendicular to the armature shaft 11 and parallel to the centre axis of the tool holder 4. Arranged on the intermediate shaft 15 is a wobble plate drive with a hub body 17 and a wobble finger 18 secured rotatable relative to said hub body. The wobble finger 18 is connected to the rear end of a hollow piston 19 which is axially reciprocable in a stationary guide tube 20 and in which is located a ram 21 which is reciprocated pneumatically, i.e. by alternating build-up of overpressure and underpressure at its rear in known manner. The ram 21 transmits impacts via an anvil 22 onto the rear end of a hammer bit, not represented, which is inserted into the tool holder 4.

Formed at the front end of the intermediate shaft 15 is a pinion 16 which meshes with a gear formed at a sleeve-like coupling part 26. The coupling part 26 sits, in a manner to be described, on a coupling shaft 25 which extends parallel to the intermediate shaft 15 and on which a gear 35 is secured non-rotatable and axially non-displaceable. The gear 35 meshes with a gear 36 which is formed on a spindle 37, so that rotation of the coupling shaft 25 effects a rotation of the gear 36 and thus of the hammer bit inserted into the tool holder 4.

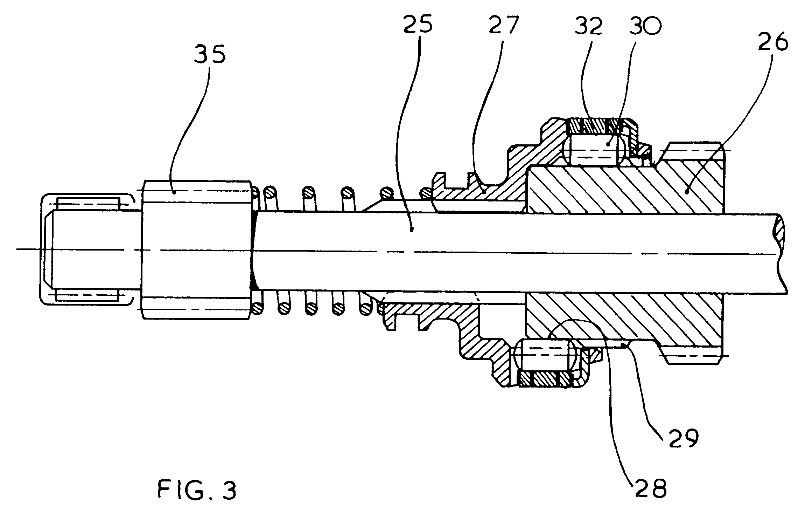

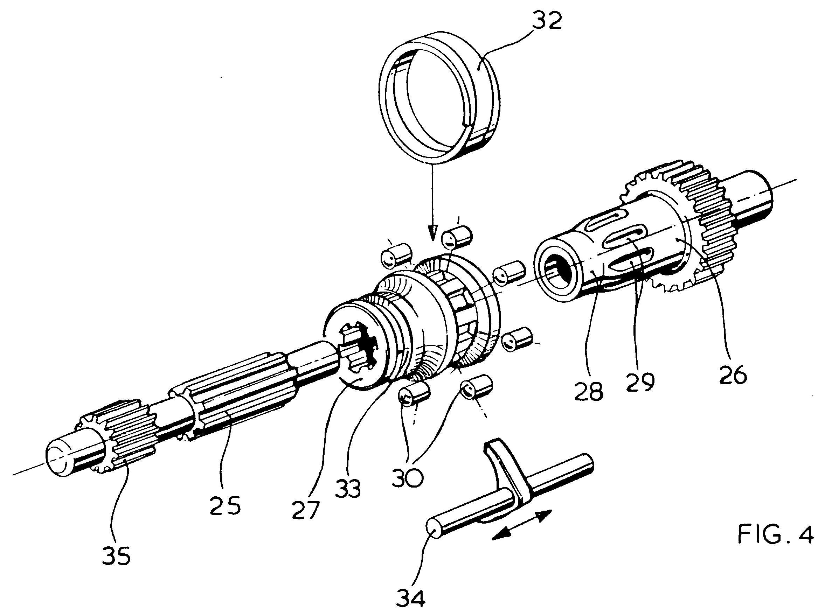

As already mentioned, the coupling part 26, is mounted on the coupling shaft 25 and is axially non-displaceable, but freely rotatable, on the shaft 25. Located adjacent to the coupling part 26, axially displaceable but non-rotatable, on the coupling shaft 25, is a second coupling part 27 which is essentially sleeve-like. This coupling part 27 is, as Figures 3 and 4 in particular show, coupled via splined portion of the coupling shaft 25 non-rotatably and axially displaceable with the latter, a coil spring spring-loading the second coupling part 27 in the direction of the first coupling part 26. A slide element 34, indicated diagrammatically in Figure 4 and actuatable by the user, engages with an annular groove 33 of the second coupling part 27 in order to displace this between two operating positions which are to be described.

The second coupling part 27 comprises radial apertures into which are inserted locking elements in the form of cylindrical roller bodies 30 (Figure 4). These roller bodies 30 are spring-loaded inwards by means of a surrounding, slotted spring ring 32 and are located, in one end-position of the second coupling part 27, adjacent locking recesses 29 of the first coupling part 26 and, in another end-position, engage with a smooth rotating surface 28 of the first coupling part 26 and, in another end-position, engage with a smooth rotating surface 28 of the first coupling part 26 which is axially offset from the locking recesses 29. In the embodiment shown in Figure 4, the axially extending, elongated locking recesses 29 lie with their groove bottom on the same peripheral circle about the rotation axis of the coupling shaft 25 as the smooth rotating surface 28 and are open towards the latter.

If the second coupling part 27 is in the end-position in which the roller bodies 30 engage with the smooth rotating surface 28 and if the intermediate shaft 15 is driven, the first coupling part 26 is caused to rotate on the coupling shaft 25 but the roller bodies 30 rolling on the smooth rotating surface 28. The coupling shaft 25 is therefore not driven and the tool holder 4 does not perform a rotary movement, i.e. the intermediate shaft 15 merely drives the hammer mechanism, so that the ram 21 generates impacts for the blows for the hammer bit, i.e. the rotary hammer works in pure hammer mode.

If the second coupling part 27 is moved axially into the other end-position by means of the slide element 34, the roller bodies 30 are moved into the locking recesses 29. With this displacement the roller bodies 30 can, upon alignment relative to the locking recesses 29, enter the latter without hindrance, as the locking recesses 29 are open at the ends facing the smooth rotating surface 28. If there is no precise alignment, it can happen that the roller bodies 30 enter the areas between the locking recesses 29 and are radially pressed outwards. With the first relative rotation of the two coupling parts 26, 27, however, the roller bodies 30 will then, because of the forces of the spring ring 32 acting on them enter the locking recesses 29.

Through the engagement between the roller bodies 30 and the locking recesses 29, the second coupling part 27 is now coupled non-rotatably with the first coupling part 26, so that, when intermediate shaft 15 is driven, the rotation of the first coupling part 26 which then occurs results in a corresponding rotation of the second coupling part 27 and thus of the coupling shaft 25 which is non-rotatably connected to this. In this way, a rotation of the tool holder 4 is effected via the gears 35 and 36, so that the rotary hammer works in combined drill and hammer mode.

If the hammer bit becomes stuck in the workpiece in this operating condition, say in a wall, and is thus no longer adequately rotatable, the connection of the two coupling parts 26 and 27 acts as an overload coupling, as the roller bodies 30 are pressed radially outwards against the forces of the spring ring 32 and run over the locking recesses 29, i.e. the driven first coupling part 26 rotates vis-à-vis the second coupling part 27 when a pre-set torque is exceeded.

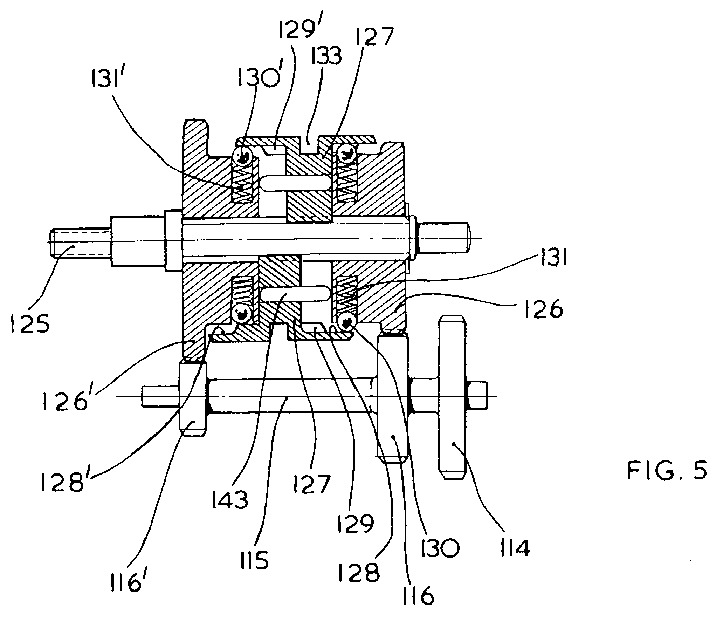

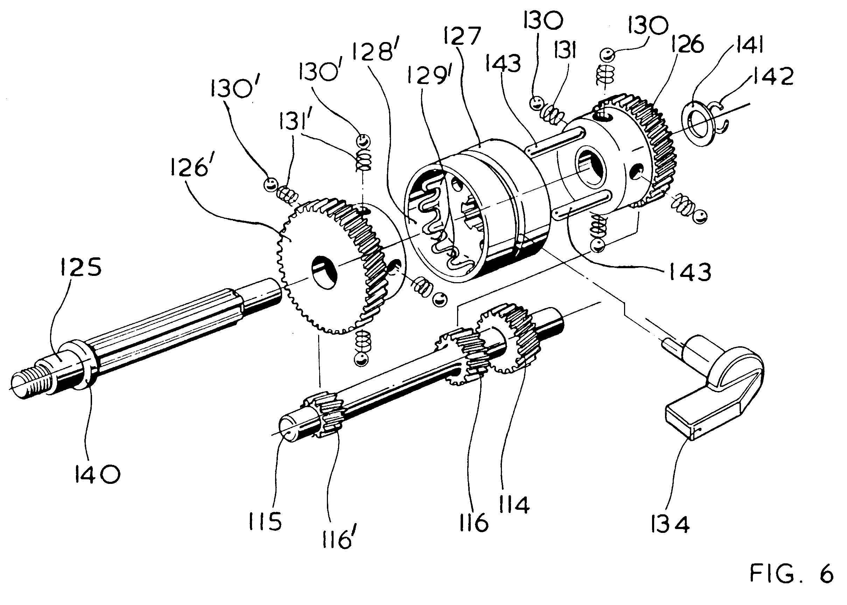

Represented in Figures 5 and 6 is a switch-over device for the switch-over between two rotation speeds of a rotary hammer or of a power drill. Included in this switch-over device for the changing of operating conditions are parts which have essentially the same function as those from the embodiment according to Figures 1 to 3, and whose reference numerals are the same except that they have been increased by 100.

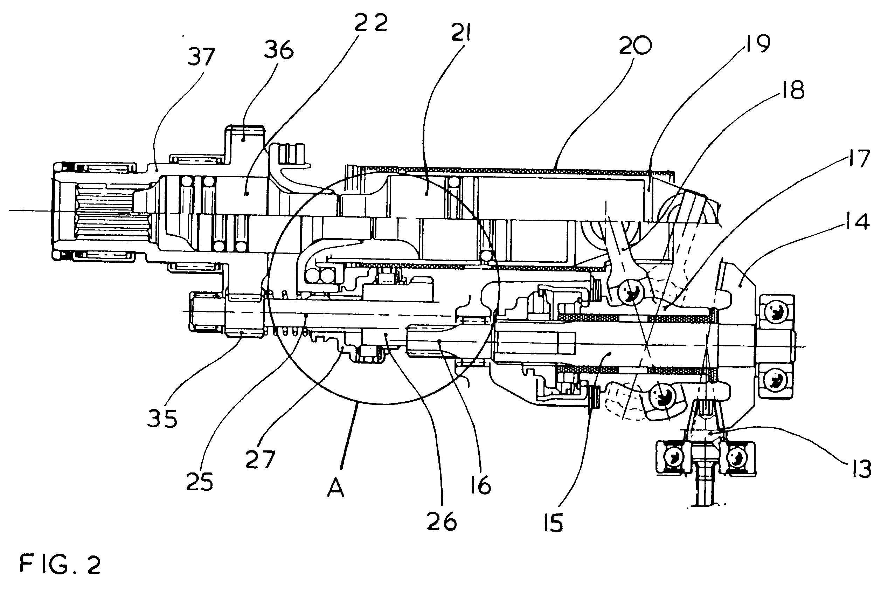

Two gears 126, 126' are arranged freely rotatable on a coupling shaft 125, which can correspond to the coupling shaft 25 in a rotary hammer according to Figures 1 and 2 but can also be a drilling spindle in a drill according to German Patent Application P 35 40 605 mentioned above. Located between the gears, on the coupling shaft 125, is a switching sleeve 127 which forms a first coupling part and which, through a splined profile design of the coupling shaft 125 and a corresponding shape of the continuous bore of the switching sleeve 127, sits non-rotatably on the coupling shaft 125, but can be displaced on the latter between a position as is indicated in the upper half of Figure 4 and a position as is shown in the lower half of Figure 4. To this end, the switching sleeve 127 has a peripheral groove 133 in which an eccentric pin of a normal rotatable changeover switch 134 (Figure 6), to be actuated by the user, engages. The switching sleeve 127 has axial continuous bores in which spacing pins 143 are displaceably arranged, which pins lie with their ends against the adjacent surfaces of the gears 126, 126' and thus ensure that the gears 126, 126' are always at the same distance and abut the assembly ring 141 positioned by a spring ring 142 and the collar 140 of the coupling shaft 125, respectively.

Gear 126 meshes with a gear 116 and gear 126' with a gear 116', which are both provided on the intermediate shaft 115, which is coupled with a drive via a gear 114. A rotation of the intermediate shaft 115 thus effects a rotation of both gears 126, 126'.

Provided in both gears 126, 126' forming second coupling parts, in the tooth-free sections which in each case extend in the direction of the opposite gear, are radial receiving bores into which the compression springs 131, 131' are inserted, which springs are supported on one side at the bottom of the receiving bore and on the other at an outside-lying, spherical roller body 130, 130'. The switching sleeve 127 has annular extensions one of which, starting from the middle zone of switching sleeve 127, extends in the direction of gear 126 and comprises, at its inner surface, locking recesses 129 and, adjacent thereto, a smooth rotating surface, while the opposite annular extension, starting from the middle zone of switching sleeve 127, has locking recesses 129' and a smooth rotating surface 128'. The extensions are so dimensioned that they always cover the roller bodies 130, 130'. In the end-position of the switching sleeve 127 shown in the upper half of Figure 5, the roller bodies 130 of gear 126 engage with the locking recesses 129 open to the rotating surface 128 and the roller bodies 130' of gear 126' are supported at the smooth rotating surface 128'. In the end-position shown in the lower half of Figure 5, roller bodies 130 lie on the smooth rotating surface 128, while roller bodies 130' engage with the locking recesses 129' open to the rotating surface 129'. In the first-mentioned position, gear 126 is thus coupled with the switching sleeve 127 and therefore unrotatable connected with the coupling shaft 125 so that, upon rotation of the intermediate shaft 115, the coupling shaft 125 is driven via gear 126, while gear 126' idles on the coupling shaft 125. In the second-mentioned position, gear 126' is connected with the coupling shaft 125, while gear 126 idles, producing a speed for the coupling shaft 125 which is different from that in the case of the first-mentioned position.

As can be seen, the annular extensions of the switching sleeve 127 are so dimensioned that the roller bodies of one gear are supported at the associated smooth rotating surface when the roller bodies of the other gear engage with the associated locking recesses, which ensures that only one of the gears 126, 126' is ever non-rotatably coupled with the coupling shaft 125. The dimensions are preferably so chosen that the roller bodies 130, 130' of both gears 126, 126' engage with the smooth rotating surfaces 128, 128' over a short section in the middle or transitional position of the switching sleeve 127, so that a times during the switch-over process, neither of the two gears 126, 126' is non-rotatably coupled with coupling shaft 125.

The engagement of spring-loaded roller bodies and locking recesses forms the overload coupling already described above in connection with the embodiment according to Figures 1 to 4, so that if a pre-set torque is exceeded, the gear which is connected non-rotatably to the coupling shat 125 via the switching sleeve 127, say gear 126, can rotate freely on coupling shaft 125, with overrunning of the locking recesses 129 by roller bodies 130, and the drive connection between intermediate shaft 115 and coupling shaft 125 is therefore interrupted.

If the switching sleeve 127 is moved into an end-position, it can happen that its locking recesses are not precisely aligned in peripheral direction relative to the roller bodies to be received.

The roller bodies are then, as indicated in the lower half of Figure 5 for roller body 130', pushed deeper into the receiving bores by the webs between the adjacent locking recesses 129', and so do not hinder the displacement of the switching sleeve 127 into its end-position. As soon as a rotation between switching sleeve 127 and gear 126' relative to each other takes place, the roller bodies 130' snap, as a result of the effects of the springs 131', into the locking recesses 129' which are coming into alignment with them, and the coupling between switching sleeve 127 and gear is effected.

## Claims

1. A power-driven tool with a rotary-driven tool holder (4) and a switch-over device, comprising at least one overload coupling, for switching between different operating conditions and/or modes, in which a first coupling part (26;127), rotatable about a rotation axis, has locking recesses (29; 129, 129') into which extend, serving as locking elements when coupled, roller bodies (30; 130, 130') which are held, nondisplaceable in circumferential direction but movable in and out of engagement with the locking recesses (29; 129, 129') in a second coupling part (27; 126, 126') which is rotatable about the rotation axis, characterized in that the first and second coupling parts are movable relative to each other between a first axial position, in which the roller bodies (30; 130, 130') can be made to engage with the locking recesses (29; 129, 129') by means of spring force, and a second axial position, and in that, in the second axial position, the roller bodies (30; 130, 130'), engage with a smooth rotating surface (28; 128, 128'), axially offset with respect to the locking recesses (29; 129, 129'), of the first coupling part (26; 127).

2. Power-driven tool according to claim 1, characterized in that the first coupling part (26; 126, 126') is driven by an intermediate shaft (15; 115) and the second coupling part (27; 127) is coupled with the tool holder (4).

3. Power-driven tool according to claim 2, characterized in that the first coupling part (26) is sleeve-like and has towards one end gearing which meshes with gearing (16) of the intermediate shaft, that the rotating surface (28) is formed towards the opposite end of the first coupling part (26) and that the locking recesses (29) are provided between the surface (28) and the gearing.

4. Power-driven tool according to claim 2 or 3, characterized in that the second coupling part (27) is mounted non-rotatably and displaceable between the first and second axial positions on a coupling shaft (25) which is coupled with the tool holder (4) via a gear arrangement (35,36).

5. Power-driven tool according to claim 4, characterized in that the first coupling part (26) is mounted freely rotatable and axially non-displaceable on the coupling shaft (25).

6. Power-driven tool according to one of claims 1 to 5, characterized in that the radial distance between the rotating surface (28) of the first coupling part (26) and the rotation axis is no greater than the radial distance between the bottom of the locking recesses (29) and the rotation axis.

7. Power-driven tool according to one of claims 1 to 6, characterized in that the locking recesses (29) are open at the ends facing the rotating surface (28).

8. Power-driven tool according to claim 1 or 2, characterized in that the switch-over device has two gears (126, 126'), arranged freely rotatable on a coupling shaft (125) and each forming a second coupling part, which have different external diameters and mesh constantly with gears (116, 116') fixed on an intermediate shaft (115), and that arranged unrotatably on the coupling shaft (125) between the gears (126, 126') is an axially displaceable switching sleeve (127) which forms the first coupling part and comprises, at each of its axially opposite ends, a smooth inner rotating surface 128, 128') and locking recesses (129, 129') lying inwardly of the surface (128, 128') for the cooperating roller bodies (130, 130') provided in the associated gear (126, 126').

9. Power-driven tool according to claim 8, characterized in that the gears (126, 126') are so spaced apart on the shaft 125 that when the roller bodies (e.g. 130) of one gear (126) are located in the area of the associated locking recesses (129) of the switching sleeve (127) the roller bodies (130') are located against the associated smooth inner rotating surface (128').

10. Power-driven tool according to claim 8 or 9, characterized in that the locking recesses (129, 129') are open at the ends facing the associated rotating surface (128, 128').

## Patentansprüche

1. Kraftgetriebenes Werkzeug mit einer drehend angetriebenen Werkzeugaufnahme (4) und einer mindestens eine Überlastkupplung aufweisenden Umschalteinrichtung zur Umschaltung zwischen unterschiedlichen Betriebszuständen und/oder -arten, wobei ein um eine Drehachse drehbares erstes Kupplungsteil (26; 127) Rastvertiefungen (29; 129, 129') aufweist, in die sich im gekuppelten Zustand als Rastelemente dienende Rollkörper (30; 130, 130') erstrecken, die in einem um die Drehachse drehbaren zweiten Kupplungsteil (27; 126, 126') in Umfangsrichtung unverlagerbar, jedoch in und außer Eingriff mit den Rastvertiefungen (29; 129, 129') bewegbar gehaltert sind, **dadurch gekennzeichnet**, daß das erste und das zweite Kupplungsteil relativ zueinander zwischen einer ersten axialen Stellung, in der die Rollkörper (30; 130, 130') mittels Federkraft mit den Rastvertiefungen (29; 129, 129') in Eingriff gebracht werden können, und einer zweiten axialen Stellung bewegbar sind, und daß die Rollkörper (30; 130, 130') in der zweiten axialen Stellung an einer gegenüber den Rastvertiefungen (29; 129, 129') axial versetzten, glatten Umlauffläche (28; 128, 128') des ersten Kupplungsteils (26; 127) anliegen.

2. Kraftgetriebenes Werkzeug nach Anspruch 1, **dadurch gekennzeichnet**, daß das erste Kupplungsteil (26; 126, 126') von einer Zwischenwelle (15; 115) angetrieben und das zweite Kupplungsteil (27; 127) mit der Werkzeugaufnahme (4) gekoppelt ist.

3. Kraftgetriebenes Werkzeug nach Anspruch 2, **dadurch gekennzeichnet**, daß das erste Kupplungsteil (26) buchsenförmig ist und an einem Ende eine mit der Verzahnung (16) der Zwischenwelle kämmende Verzahnung aufweist, daß die Umlauffläche (28) an dem der Verzahnung abgewandten Ende des ersten Kupplungsteils (26) ausgebildet ist und daß die Rastvertiefungen (29) zwischen der Fläche (28) und der Verzahnung vorgesehen sind.

4. Kraftgetriebenes Werkzeug nach Anspruch 2 oder 3, **dadurch gekennzeichnet**, daß das zweite Kupplungsteil (27) unverdrehbar und zwischen der ersten und der zweiten axialen Stellung verschiebbar auf einer Kopplungswelle (25) angeordnet ist, die über eine Zahnanordnung (35, 36) mit der Werkzeugaufnahme (4) gekoppelt ist.

5. Kraftgetriebenes Werkzeug nach Anspruch 4, **dadurch gekennzeichnet**, daß das erste Kupplungsteil (26) frei drehbar und axial unverschiebbar auf der Kopplungswelle (25) sitzt.

6. Kraftgetriebenes Werkzeug nach einem der Ansprüche 1 bis 5, **dadurch gekennzeichnet**, daß der radiale Abstand zwischen der Umlauffläche (28) des ersten Kupplungsteils (26) und der Drehachse nicht größer ist als der radiale Abstand zwischen dem Grund der Rastvertiefungen (29) und der Drehachse.

7. Kraftgetriebenes Werkzeug nach einem der Ansprüche 1 bis 6, **dadurch gekennzeichnet**, daß die Rastvertiefungen (29) an den der Umlauffläche (28) zugewandten Enden offen sind.

8. Kraftgetriebenes Werkzeug nach Anspruch 1 oder 2, **dadurch gekennzeichnet**, daß die Umschalteinrichtung zwei auf einer Kopplungswelle (125) frei drehbar angeordnete und je ein zweites Kupplungsteil bildende Zahnräder (126, 126') aufweist, die unterschiedliche Außendurchmesser haben und ständig mit fest auf einer Zwischenwelle (115) sitzenden Zahnrädern (116, 116') kämmen, und daß auf der Kopplungswelle (125) zwischen den Zahnrädern (126, 126') eine axial verschiebbare Schaltbuchse (127) unverdrehbar angeordnet ist, die das erste Kupplungsteil bildet und an ihren axial gegenüberliegenden Enden jeweils eine glatte innere Umlauffläche (128, 128') und für die mitwirkenden Rollkörper (130, 130') Rastvertiefungen (129, 129') aufweist, die im zugehörigen Zahnrad (126, 126') angeordnet sind und bezüglich der Fläche (128, 128') nach innen gerichtet liegen.

9. Kraftgetriebenes Werkzeug nach Anspruch 8, **dadurch gekennzeichnet**, daß die Zahnräder (126, 126') auf der Welle (125) voneinander beabstandet sind, so daß bei Anordnung der Rollkörper (z.B. 130) des einen Zahnrades (126) im Bereich der zugehörigen Rastvertiefungen (129) der Schaltbuchse (127), die Rollkörper (130') an der zugehörigen glatten inneren Umlauffläche (128') anliegen.

10. Kraftgetriebenes Werkzeug nach Anspruch 8 oder 9, **dadurch gekennzeichnet**, daß die Rastvertiefungen (129, 129') an den der zugehörigen Umlauffläche (128, 128') zugewandten Enden offen sind.

## Revendications

1. Un outil entraîné par moteur muni d'un porte-outil (4) entraîné en rotation et d'un dispositif de commutation, comprenant au moins un accouplement limiteur de charge, pour effectuer une commutation entre diverses conditions et/ou modes de fonctionnement, dans lequel un premier organe d'accouplement (26, 127), monté rotatif autour d'un axe de rotation, comporte des évidements de verrouillage (29; 129, 129') dans lesquels pénètrent des organes de roulement (30; 130. 130') servant d'éléments de verrouillage lorsqu'ils sont en prise, qui sont retenus, de manière fixe dans la direction circonférentielle mais mobiles pour venir dans et hors d'engagement avec les évidements de verrouillage (29; 129, 129'), dans un second organe d'accouplement (27; 126, 126') qui est monté rotatif autour de l'axe de rotation, caractérisé en ce que les premier et second organes d'accouplement sont mobiles l'un par rapport à l'autre entre une première position axiale, dans laquelle les organes de roulement (30; 130, 130') peuvent être amenés à s'engager dans les évidements de verrouillage (29; 129, 129') sous l'action d'une force élastique, et une seconde position axiale et en ce que, dans la seconde position axiale, les organes de roulement (30; 130, 130') viennent en appui contre une surface rotative lisse (28; 128, 128'), axialement décalée par rapport aux évidements de verrouillage (29; 129, 129'), du premier organe d'accouplement (26; 127).

2. Outil entraîné par moteur selon la revendication 1, caractérisé en ce que le premier organe d'accouplement (26; 126, 126') est entraîné par un arbre intermédiaire (15; 115) et le second organe d'accouplement (27; 127) est accouplé au porte-outil (4).

3. Outil entraîné par moteur selon la revendication 2, caractérisé en ce que le premier organe d'accouplement (26; 126, 126') est du type manchon et comporte, au voisinage d'une première extrémité, un engrenage qui engrène avec un engrenage (16) porté par l'arbre intermédiaire, en ce que la surface rotative (28) est formée au voisinage de l'extrémité opposée du premier organe d'accouplement (28) et en ce que les évidements de verrouillage (29) sont disposés entre la surface rotative (28) et l'engrenage.

4. Outil entraîné par moteur selon la revendication 2 ou 3, caractérisé en ce que le second organe d'accouplement (27) est monté solidaire en rotation et mobile entre des première et seconde positions axiales sur un arbre d'accouplement (25) qui est accouplé au porte-outil (4) par l'intermédiaire d'un train d'engrenages (35, 36).

5. Outil entraîné par moteur selon la revendication 4, caractérisé en ce que le premier organe d'accouplement (26) est monté à rotation libre et axialement fixe sur l'arbre d'accouplement (25).

6. Outil entraîné par moteur selon l'une des revendications 1 à 5, caractérisé en ce que la distance radiale entre la surface rotative (28) du premier organe d'accouplement (26) et l'axe de rotation n'est pas supérieure à la distance radiale entre le fond des évidements de verrouillage (29) et l'axe de rotation.

7. Outil entraîné par moteur selon l'une des revendications 1 à 5, caractérisé en ce que les évidements de verrouillage (29) sont ouverts aux extrémités faisant face à la surface rotative (28).

8. Outil entraîné par moteur selon la revendication 1 ou 2, caractérisé en ce que le dispositif de commutation comporte deux engrenages (126, 126') montés à rotation libre sur un arbre d'accouplement (125), chacun des engrenages formant un second organe d'accouplement, lesdits engrenages ayant des diamètres externes différents et étant constamment en prise avec des engrenages calés sur un arbre intermédiaire et en ce qu'un manchon de commutation (127) monté sur l'arbre d'accouplement, solidaire en rotation de ce dernier et axialement mobile entre les engrenages, forme le premier organe d'accouplement et comporte, à chacune de ses extrémités axialement opposées, une surface rotative intérieure lisse (128, 128') et des évidements de verrouillage (129, 129') situés à l'intérieur par rapport à la surface (128, 128') pour recevoir les organes de roulement coopérants (130, 130') prévus dans l'engrenage correspondant (126, 126').

9. Outil entraîné par moteur selon la revendication 8, caractérisé en ce que les engrenages (126, 126') sont espacés l'un de l'autre sur l'arbre (125) d'une manière telle que, lorsque les organes de roulement (par exemple, 130) d'un engrenage (126) se trouvent dans la région des évidements de verrouillage correspondants (129) du manchon de commutation (127), les organes de roulement (130') reposent sur la surface intérieure rotative lisse correspondante (128').

10. Outil entraîné par moteur selon la revendication 8 ou 9, caractérisé en ce que les évidements de verrouillage (129, 129') sont ouverts aux extrémités qui font face à la surface rotative correspondante (128, 128').
